# EUROPÄISCHE PATENTSCHRIFT

(11) **EP 3 159 457 B1**
(45) Veröffentlichungstag und Bekanntmachung des Hinweises auf die Patenterteilung: **04.12.2019**
(21) Anmeldenummer: 16194345.1
(22) Anmeldetag: 18.10.2016
(51) Int. Cl.: E03B 7/04, F28D 20/02

(54) **TRINK- UND BRAUCHWASSERVERSORGUNGSEINRICHTUNG**
DRINKING AND DOMESTIC WATER SYSTEM
DISPOSITIF D'ALIMENTATION EN EAU POTABLE ET SANITAIRE

(30) Priorität: 20.10.2015 DE 202015007277 U
(43) Veröffentlichungstag der Anmeldung: 26.04.2017
(73) Patentinhaber: Gebr. Kemper GmbH + Co. KG Metallwerke, 57462 Olpe (DE)
(72) Erfinder: Markert, Felix, 46325 Borken (DE)
(74) Vertreter: Grünecker Patent- und Rechtsanwälte PartG mbB

(56) Entgegenhaltungen:
- EP-A2- 2 487 301
- DE-U1-202012 103 128
- DE-U1-202014 001 131
- DE-U1-202014 103 193

## Beschreibung

Die vorliegende Erfindung betrifft eine Trink- und Brauchwasserversorgungseinrichtung eines Gebäudes mit einem Hausanschluss für kaltes Trinkwasser, der an das öffentliche Versorgungsnetz angeschlossen ist, zumindest einer Zirkulationsleitung, die zu zumindest einem Verbraucher führt und die mit einer Pumpe versehen ist, und einem in der Zirkulationsleitung vorgesehenen Wärmetauscher, der dem Trinkwasser Wärme entzieht.

Eine solche Versorgungseinrichtung ist beispielsweise aus der DE 10 2011 010 840 A1, dem DE 20 2014 103 193 U1 oder dem DE 20 2014 001 131 U1 bekannt.

Ähnliche Versorgungseinrichtungen sind aus der DE 10 2006 018 807 A1, der EP 1 845 207 A1 oder der EP 1 887 150 A1 bekannt.

Üblicherweise wird in einem Gebäude Warmwasser zirkuliert, um das in der Zirkulationsleitung enthaltene warme Wasser permanent auszutauschen und einer zentralen Einrichtung zur Erwärmung des Warmwassers zuzuführen. So wird verhindert, dass in der Leitung stehendes Warmwasser erkaltet und beim Zapfen von Warmwasser zunächst relativ kaltes Wasser abgegeben wird, dessen Temperatur nicht den Wünschen des Benutzers entspricht.

Die zuvor erwähnten Stand der Technik-Dokumente belegen ferner das Bemühen insbesondere der vorliegenden Anmelderin, durch Zirkulation von Kaltwasser sicherzustellen, dass durch die Trink- und Brauchwasserversorgungseinrichtung abgegebenes Kaltwasser den hygienischen Anforderungen genügt. Dieses Kaltwasser kann beispielsweise durch Spülen abgegeben werden. Hierzu ist am Ende einer Kaltwasser-Versorgungsleitung ein Spülventil vorgesehen. Das DE 20 2008 002 822 U1 offenbart dabei insbesondere verschiedene Arten, wie auf abgestandenes und gegebenenfalls verkeimtes Wasser geschlossen werden kann. Dabei wird unter anderem auch die Wassertemperatur in der Leitung gemessen und auf die Notwendigkeit geschlossen, das Wasser auszutauschen. Ein aus der EP 1 887 150 A2 bekanntes Ausführungsbeispiel einer Versorgungseinrichtung mit Zirkulation nutzt eine biologische Eliminierungseinheit, mit welcher Bakterien aus dem Wasser entfernt werden können. Die Keimfreiheit ist indes nicht allein von Interesse bei der Bereitstellung von kaltem Trink- und Brauchwasser.

Durch die Verwendung eines Wärmetauschers ist es möglich, kaltes Trink- und Brauchwasser bereitzustellen ohne dass die Notwendigkeit besteht, durch regelmäßiges Spülen verbrauchtes, gegebenenfalls zu warmes abgestandenes oder bakteriell bedenkliches Wasser an das Abwassersystem abzugeben. Der Wärmetauscher ist innerhalb der Zirkulationsleitung vorgesehen, sodass beim Betrieb der Pumpe das in der Zirkulationsleitung enthaltene Wasser in dem Wärmetauscher gekühlt und auf unterkritischen Temperaturen gehalten wird. So entfällt üblicher Weise die Notwendigkeit eines Spülventils in der Zirkulationsleitung.

Der vorliegenden Erfindung liegt das Problem zugrunde, eine verbesserte Trink- und Brauchwasserversorgungseinrichtung der eingangs genannten Art anzugeben.

Zur Lösung dieses Problems wird mit der vorliegenden Erfindung eine Trink- und Brauchwasserversorgungseinrichtung mit den Merkmalen von Anspruch 1 vorgeschlagen. Diese Versorgungseinrichtung hat einen Wärmetauscher, der durch einen Latentwärmespeicher gebildet ist, und ein in der Zirkulationsleitung vorgesehenes motorbetriebenes Spülventil, das steuerungsmäßig mit einer Steuervorrichtung verbunden ist, zwischen dem Latentwärmespeicher und einer Mündung des Hausanschlusses in die Zirkulationsleitung vorgesehen ist und in Strömungsrichtung dem Latentwärmespeicher nachgeordnet ist. Die erfindungsgemäße Lösung beschränkt sich nicht darauf, Verkeimung abzutöten, wie dies für eine Warmwasserzirkulation aus der EP 1 887 150 A2 in Verbindung mit Warmwasser bekannt ist. Vielmehr geht es der vorliegenden Erfindung darum, kaltes Trink- und Brauchwasser bereitzustellen, welches eine bestimmte, normativ geforderte Temperatur des Trinkwassers, kalt (TWK), nicht überschreitet. Diese kritische Temperatur liegt üblicherweise bei 25°C.

Bei dem erfindungsgemäßen Latentwärmespeicher befindet sich das zu kühlende Wasser auf einer Seite einer Trennung, wohingegen sich auf der anderen Seite ein Medium befindet, welches latente Energie speichert. Latente Energie ist diejenige Energie, die zum Phasenübergang von fest auf flüssig bzw. von flüssig auf gasförmig erforderlich ist. Während der Änderung des Aggregatzustandes eines reinen Stoffes erfolgt dabei keine Temperaturänderung, da die latente Energie benötigt wird, um den Phasenwechsel zu erzeugen. Hiervon ist sensible Energie zu unterscheiden, die immer mit einer Temperaturänderung des Stoffes verbunden ist, wobei beim Zu- bzw. Abführen von sensibler Energie keine Umwandlung des Aggregatzustandes stattfindet.

So ist es möglich, in einem Latentwärmespeicher bei konstantem Temperaturniveau eine relativ große Wärmemenge zu übertragen und zu speichern. So eignet sich der Latentwärmespeicher dazu, dem zu kühlenden Wasser bei konstantem Temperaturniveau Wärme zu entziehen und diese in dem Latentwärmespeicher zu speichern. Ein Latentwärmespeicher ist dementsprechend nicht von einem anderen Medium zur abführenden Wärme aus dem Trinkwasser durchströmt. Vielmehr ist das die Wärme latent speichernde Medium in dem Latentwärmespeicher eingeschlossen.

Selbst bei einer Fehlfunktion oder einer Sättigung des Latentwärmespeichers, also wenn durch das Trinkwasser keine Wärme mehr auf den Latentwärmespeicher übertragen werden kann, gewährleistet die vorliegende Erfindung, dass eine kritische Temperatur des Trinkwassers, kalt (TWK), nicht überschritten wird. Hierzu kann über das mit der Steuervorrichtung verbundene Spülventil das Ableiten zu stark erwärmten Wassers aus der Zirkulationsleitung automatisiert erfolgen. Bei einer Sättigung ermöglicht die Anordnung des Spülventils zwischen dem Latentwärmespeicher und einer Mündung des Hausanschlusses in die Zirkulationsleitung und in Strömungsrichtung dem Latentwärmespeicher nachgeordnet eine Regeneration des Latentwärmespeichers, indem Wärme aus dem Latentwärmespeicher auf das Medium der Zirkulationsleitung übertragen wird, welches bei Bedarf über das Spülventil abgeführt und durch frisches kälteres Wasser aus dem Hausanschluss ersetzt werden kann.

Vorzugsweise ist in dem Latentwärmespeicher ein Phase-wechselndes-Medium (PCM, Englisch: Phase Change Material) enthalten, welches einen für den Anwendungsfall günstigen Schmelz- bzw. Kristallisationspunkt aufweist. Geeignete PCM-Medien sind beispielsweise in Boiting B. und Hollenbeck P. (2013) PCM-Kühldecken Teil 1: Grundlagen; HLH Band 64 (213) Nr. 4 - April, S. 108-111 beschrieben. Die dort beschriebenen PCMs eignen sich insbesondere zum Einschluss in den Latentwärmespeicher.

Dabei wird ein PCM bevorzugt, welches Schmelz- bzw. Kristallisationstemperaturen von kleiner 25°C, bevorzugt von kleiner 22°C hat, wie beispielsweise die Produkte DS 5037 X, D 5038 X, D 5039 X und G S 5040 X der Firma Micronal.

Gemäß einer bevorzugten Weiterbildung der vorliegenden Erfindung ist die Steuervorrichtung steuerungsmäßig mit zumindest zwei Temperatursensoren verbunden. Es handelt sich zum Einen um einen Temperatursensor, der dem Wärmetauscher zugeordnet ist.

Dieser Temperatursensor misst die Temperatur des in dem Latentwärmespeicher enthaltenen und die Wärme speichernden Mediums. Der andere Temperatursensor ist in der Zirkulationsleitung angeordnet, beispielsweise in der Nähe eines Verbrauchers und/oder in Strömungsrichtung unmittelbar dem Wärmetauscher vorgelagert. Dieser Temperatursensor misst die Temperatur des in der Zirkulationsleitung zirkulierenden Wassers.

Die entsprechende Ausgestaltung bietet die Möglichkeit, bei übermäßiger Erwärmung von Wasser in der Zirkulationsleitung die Wärme abzuleiten. Hierzu hat die Steuervorrichtung üblicherweise einen ersten Spülmodus, in dem bei übermäßiger Wassererwärmung des Wassers in der Zirkulationsleitung ein Spülventil zum Ableiten von Wasser aus der Zirkulationsleitung geöffnet wird. Das Spülventil, welches sich zwischen dem Wärmetauscher und der Mündung des Hausanschlusses in die Zirkulationsleitung befindet, wird dabei üblicherweise so lange geöffnet, bis der Temperatursensor das Unterschreiten der Wassertemperatur in der Zirkulationsleitung unterhalb einer kritischen Wassertemperatur anzeigt.

Dieser erste Spülmodus kann kombiniert sein mit einem vorzugsweise in der Steuervorrichtung hinterlegten Kühlmodus. In diesem Kühlmodus wird abhängig von einem Vergleich der Temperaturen, die durch die beiden Temperatursensoren gemessen wird, das Spülventil geöffnet, um Wasser aus der Zirkulationsleitung abzuleiten. Dabei wird nicht nur die Zirkulationsleitung in dem Kühlmodus gespült, d. h. Wasser ausgetauscht. Vielmehr wird durch die Temperaturüberwachung des Wärmetauschers festgestellt, ob dieser aufgrund seiner Temperatur geeignet ist, wärmeres Kaltwasser, welches nach dem Kühlmodus erneut in der Leitung zirkuliert, auf eine unterkritische Temperatur zu kühlen. In dem Kühlmodus wird dementsprechend dem Wärmetauscher Wärme entzogen. Der Latentwärmespeicher wird regeneriert. Das dabei erwärmte Wasser in der Zirkulationsleitung wird indes über das dem Latentwärmespeicher in Strömungsrichtung nachgeordnete Spülventil abgeführt bevor es sich mit dem in der Mündung des Hausanschlusses eintretenden kalten Frischwasser vermischen kann. Das Spülventil ist hierfür zwischen dem Latentwärmespeicher und der Mündung des Hausanschlusses vorgesehen.

Während im Kühlmodus Wasser abhängig von den Messwerten der beiden Temperatursensoren aus der Zirkulationsleitung abgeleitet und durch kälteres Frischwasser, welches über den Hausanschluss zugeleitet wird, ersetzt wird, wird in einem zweiten Spülmodus das Spülen abhängig von einem Volumenstromsensor gesteuert. Dieser Volumenstromsensor befindet sich zwischen dem Hausanschluss und der Zirkulationsleitung. Er befindet sich dabei üblicherweise nahe an einer Mündung zwischen einer den Hausanschluss bildenden Hausanschlussleitung in die Zirkulationsleitung. Dieser zweite wie auch der erste Spülmodus kann abhängig von der Wassertemperatur in der Zirkulationsleitung gestoppt werden. Der jeweilige Spülmodus kann auch zeitabhängig gestoppt werden.

Des Weiteren hat die Steuervorrichtung vorzugsweise einen Regenerationsmodus, in dem abhängig von einer in dem Wärmetauscher gemessenen Temperatur ein Spülen zur Regeneration eines die Wärme des Trinkwassers im Kühlbetrieb aufnehmenden Mediums vorgegeben wird. Bei diesem Medium handelt es sich üblicherweise um das PCM. Der Regenerationsmodus wird betrieben, wenn aufgrund der Temperatur in dem Wärmetauscher, gegebenenfalls durch Abgleich zwischen dieser Temperatur und der Temperatur des Wassers in der Zirkulationsleitung feststeht, dass auch durch Zirkulation dieses Wassers eine Kühlung und damit Regeneration des Wärmetauschers nicht erreicht werden kann. So wird Wasser aus der Zirkulationsleitung abgeleitet. Das hierbei in die Zirkulationsleitung eingeleitete kühlere Frischwasser wird zur Kühlung des Mediums und danach zur Regeneration des Wärmetauschers eingesetzt. Diese Regeneration findet dann ihr Ende, wenn durch die Messung des dem Wärmetauscher zugeordneten Temperatursensors festgestellt wird, dass dieses Medium in der Lage ist, durch Phasenübergang Wärme zu speichern und dementsprechend dem zirkulierenden Kaltwasser in der Zirkulationsleitung Wärme zu entziehen.

Beim Einleiten von Frischwasser über den Hausanschluss in die Zirkulationsleitung, d. h. im ersten Spülmodus und/oder zweitem Spülmodus und/oder im Kühlmodus wird bevorzugt die Zirkulationspumpe ausgeschaltet, so dass lediglich die Druckdifferenz des von der Hausanschlussseite in die Versorgungseinrichtung einströmenden Wassers genutzt wird, um die Zirkulationsleitung zu durchspülen und verbrauchtes Wasser abzuführen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine schematische Ansicht eines ersten Ausführungsbeispiels einer erfindungs-gemäßen Kaltwasserversorgungseinrichtung und
- Fig. 2: eine schematische Darstellung eines zweiten Ausführungsbeispiels einer erfindungsgemäßen Kaltwasserversorgungseinrichtung.

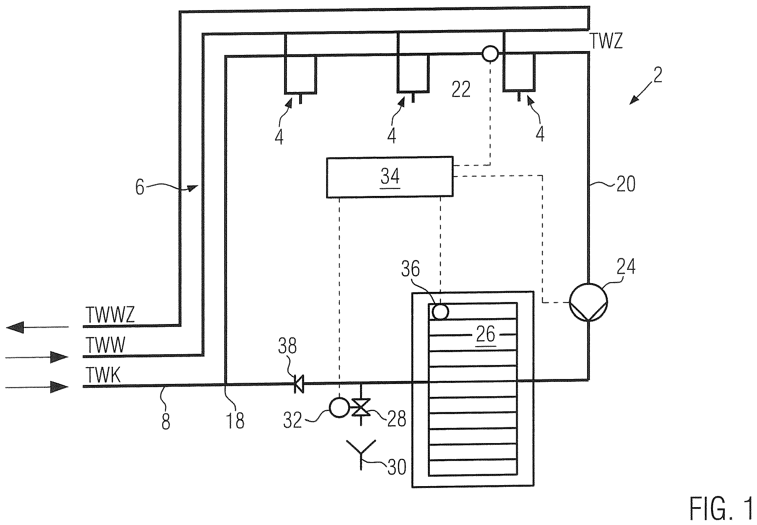

Die Fig. 1 verdeutlicht ein Ausführungsbeispiel einer Trink- und Brauchwasserversorgungseinrichtung 2 mit mehreren Verbrauchern 4, an denen warmes und kaltes Trinkwasser gezapft werden kann. Für die Versorgung mit Warmwasser ist eine Warmwasserzirkulation vorgesehen, die üblicherweise warmes Trink- oder Brauchwasser TWW von einer zentralen Warmwasseraufbereitung in eine Warmwasser-Zirkulationsleitung 6 einleitet und üblicherweise gesteuert durch ein thermostatisches Ventil in Strömungsrichtung hinter dem letzten Verbraucher 4 an die zentrale Warmwasseraufbereitung zurückleitet. Dieser zurückleitende Ast der Warmwasserzirkulation 6 ist mit TWWZ gekennzeichnet.

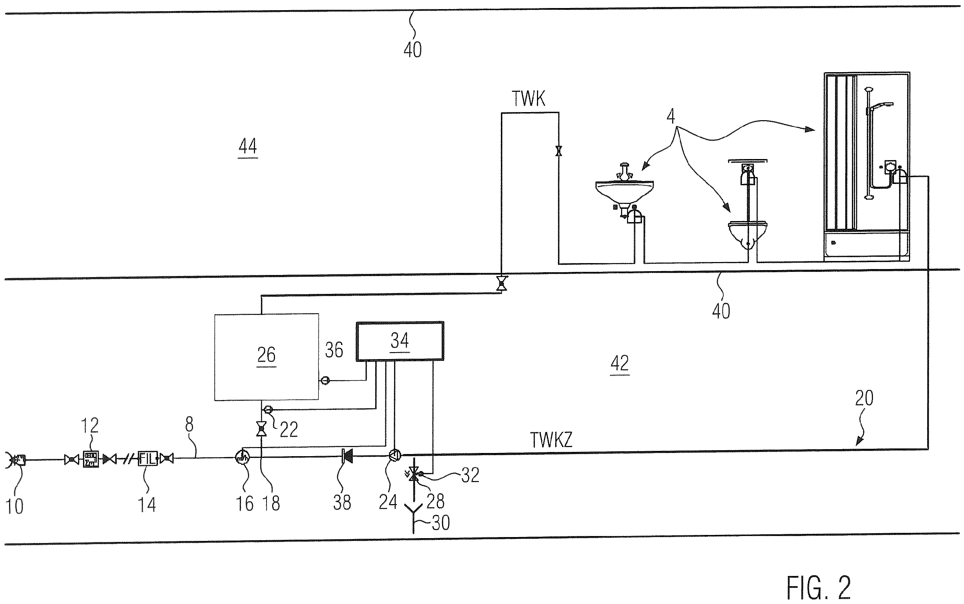

Das Ausführungsbeispiel der Versorgungseinrichtung 2 hat eine Hausanschlussleitung 8, die zu einem mit dem öffentlichen Kaltwasserversorgungsnetz verbundenen Hausanschluss 10 führt. Zwischen diesem Hausanschluss 10 ist zwischen zwei Absperrventilen ein Wasserzähler 12 vorgesehen, dem ein Filter 14 nachgeschaltet ist (vgl. Fig. 2).

Fig. 2 verdeutlicht ferner einen Volumenstromsensor 16, der in Strömungsrichtung unmittelbar vor einer Mündung 18 angeordnet ist, an welcher die Hausanschlussleitung 8 in eine mit Bezugszeichen 20 gekennzeichnete Zirkulationsleitung für kaltes Trinkwasser TWKZ mündet. In Zirkulationsrichtung ausgehend von dieser Mündung 18 sind bei dem Ausführungsbeispiel nach Fig. 1 zunächst die Verbraucher 4 an die Zirkulationsleitung 20 angeschlossen. Zwischen zwei Verbrauchern 4 befindet sich ein Temperatursensor 22, der die Temperatur des in der Zirkulationsleitung 20 zirkulierenden Kaltwassers misst. Den Verbrauchern 4 in Strömungsrichtung nachgeordnet befindet sich eine Zirkulationspumpe 24. Dieser wiederum in Strömungsrichtung innerhalb der Zirkulationsleitung 20 nachgeordnet befindet sich ein Wärmetauscher 26, der mit PCM als wärmeaufnehmendes Medium befüllt ist und als Plattenwärmetauscher mit einer Vielzahl von Platten versehen ist, die das zu kühlende Kaltwasser von dem Medium trennen. In Strömungsrichtung hinter diesem Latentwärmespeicher 26 befindet sich ein Spülventil 28 mit freiem Auslauf 30. Das Spülventil 28 ist motorgetrieben. Der mit Bezugszeichen 32 angedeutete Motor ist steuerungsmäßig mit einer Steuervorrichtung 34 verbunden, die steuerungsmäßig mit dem Temperatursensor 22 für das Kaltwasser und einem mit Bezugszeichen 36 gekennzeichneten Temperatursensor für das in dem Latentwärmespeicher 26 enthaltene Medium verbunden ist. Dieser Temperatursensor 36 misst die Temperatur des Mediums innerhalb des Latentwärmespeichers 26.

In Strömungsrichtung hinter dem Spülventil 28 ist schließlich ein Rückflussverhinderer 38 vorgesehen, der eine Strömung von Kaltwasser entgegen der Förderrichtung der Pumpe 24 verhindert.

In Fig. 2 sind gegenüber Fig. 1 gleiche Bauteile mit gleichen Bezugszeichen versehen. In Fig. 2 wird durch die horizontalen und mit Bezugszeichen 40 gekennzeichneten Linien jeweils ein Stockwerk angedeutet. Die zuvor erwähnten Komponenten befinden sich in einem Keller 42. Die Verbraucher 4 seien in einem darüber vorgesehenen Stockwerk 44 installiert.

Bei diesem Ausführungsbeispiel befindet sich der Latentwärmespeicher 26 zwischen der Mündung 18 und dem ersten Verbraucher 4. Das Spülventil 28 ist der Zirkulationspumpe 24 in Strömungsrichtung innerhalb der Zirkulationsleitung 20 vorgelagert.

Nachfolgend wird die Funktionsweise der Ausführungsbeispiele beschrieben. Die Zirkulationspumpe 24 fördert einen Volumenstrom, der für eine Wärmeabfuhr im Kaltwassersystem sorgen soll, und zwar von der Mündung 18 durch den Latentwärmespeicher 26 sowie vorbei an den verschiedenen Verbrauchern 4. Die Steuervorrichtung 34 erfasst über den Temperatursensor 36 die Temperatur eines in dem Latentwärmespeicher 26 enthaltenen PCM. Die Steuervorrichtung 34 löst dabei nach Bedarf eine Spülmaßnahme aus, indem über den Motor 32 das motorgetriebene Spülventil 28 geöffnet und Wasser über den freien Auslauf 30 abgeleitet wird. Dieses Spülen wird bei einer Grundform der Steuervorrichtung 34 so lange durchgeführt, bis der Temperatursensor 36 die Eigenschaft des Latentwärmespeichers anzeigt, durch Phasenumwandlung erneut Wärme aufnehmen zu können. Dazu sind in der Steuervorrichtung Temperaturwerte hinterlegt, die den jeweiligen Aggregatzuständen des PCM zugeordnet sind. Zwischen dem oberen und dem untern Temperaturwert findet eine Regeneration des Latentwärmespeichers 26 statt. Dieser Modus der Steuervorrichtung 34 entspricht dem Regenerationsmodus.

Durch den Temperatursensor 22 kann auf eine unzulässig hohe Temperatur des kalten Trinkwassers in der Zirkulationsleitung 20 geschlossen werden. Dieses Messergebnis wird in der Steuervorrichtung 34 ausgewertet, um das motorgetriebene Spülventil 28 zu aktivieren und das Wasser in der Zirkulationsleitung 20 durch frisches Wasser aus dem öffentlichen Versorgungsnetz durch den Hausanschluss 10 in diesem ersten Spülmodus der Zirkulationsleitung 20 zuzuführen.

Durch den Temperatursensor 22 bzw. den Volumenstromsensor 16 kann darüber hinaus durch die Steuervorrichtung 34 jeweils ein kritischer Zustand ermittelt werden. So kann der Volumenstromsensor 16 anzeigen, dass über eine gewisse, voreingestellte Zeitspanne kein kaltes Brauchwasser über zumindest einen der Verbraucher 4 entnommen wurde. Dies kann zu einer übermäßigen Erwärmung, d. h. in der Regel bei einer übermäßig langen Verweilzeit des in der Zirkulationsleitung 20 anstehenden Wassers führen. Allein der Zeitablauf für sich kann indes auch genutzt werden, um auf eine unzureichende Wasserqualität zu schließen. Die Signale des Volumenstromsensors werden in der Steuervorrichtung 34 verarbeitet, die das motorgetriebene Spülventil 28 dazu veranlasst, Wasser aus der Zirkulationsleitung 20 abzuleiten und gegen Frischwasser auszutauschen. Das Ende dieses zweiten Spülmodus kann zeit- und/oder volumenstromgesteuert sein. Ebenso gut kann der Messwert des Temperatursensors 22 angezogen werden, um auf hinreichend ausgetauschtes Frischwasser zu schließen.

Das Ausführungsbeispiel hat des Weiteren verschiedene Betriebsfälle. Im ersten Betriebsfall besitzt das in dem Latentwärmespeicher 26 enthaltene PCM eine Temperatur, die über der Schmelztemperatur liegt. Das PCM ist daher flüssig. Die Zirkulationspumpe 24 ist im Betrieb und fördert Kaltwasser, um dieses innerhalb der Zirkulationsleitung 20 zirkulieren zu lassen. Allerdings wird die Zirkulationspumpe 24 üblicherweise diskontinuierlich betrieben. Der Betrieb der Zirkulationspumpe 24 wird üblicherweise gestoppt, wenn durch einen der Sensoren ein Abzug von Wasser an einem der Verbraucher 4 festgestellt wird. Durch diesen Bezug wird kaltes Wasser, dessen Temperatur unter der Kristallisationstemperatur des PCM liegt, in die Versorgungseinrichtung 20 eingeleitet. Auch der Latentwärmespeicher 26 wird von diesem kalten Wasser durchflossen und gibt Wärme an das Wasser ab. Dadurch wird das PCM zur Kristallisation gebracht. Durch die Kristallisation des PCM wird das Potenzial Wärme aufzunehmen für Zeiten, in denen keine Entnahme stattfindet, gespeichert. Wenn die Entnahme des Trinkwassers nicht ausreicht das PCM vollständig zur Kristallisation zu bringen, kann der erste, der zweite Spülmodus oder der Regenerationsmodus geschaltet werden, um zusätzlich kühles Frischwasser in die Versorgungseinrichtung 2 einzuleiten und das PCM ganz oder teilweise zu regenerieren.

Im Kühlbetrieb ist das in dem Latentwärmespeicher 26 enthaltene PCM kristallisiert. Es kann dem Kaltwasser, welches durch den Latentwärmespeicher 26 fließt, Wärme entziehen. Eine solche Kühlung des Kaltwassers durch den Latentwärmetauscher 26 ist auch dann gegeben, wenn keine Entnahme von Kaltwasser über einen der Verbraucher erfolgt. Allerdings wird durch die Umgebungstemperatur Wärme in die Zirkulationsleitung 20 eingetragen. Die Zirkulationspumpe 24 fördert im Kühlbetrieb diskontinuierlich Wasser durch den Latentwärmespeicher 26. Der Latentwärmespeicher 26 nimmt diese Wärme von dem fließenden Kaltwasser auf. Das PCM wird dabei wieder flüssig. Hierdurch wird die Erwärmung des Wassers vermindert.

Wie gezeigt bietet die erfindungsgemäße Lösung den Vorteil, dass Kaltwasser innerhalb einer Kaltwasserversorgungseinrichtung gekühlt werden kann ohne dass die Notwendigkeit besteht, Kaltwasser über ein Spülventil abzuleiten. Vielmehr reicht z. B. bei dem Ausführungsbeispiel nach Fig. 2 bei einem regelmäßigen Abzug von Kaltwasser über einen der Verbraucher 4 das dabei aus dem öffentlichen Versorgungsnetz eingeleitete Kaltwasser aus, den Latentwärmespeicher 26 ganz oder teilweise zu regenerieren, so dass in Phasen, in denen kein Kaltwasser abgezogen wird, die hierbei eingestellte Kapazität des Latentwärmespeichers 26 Wärme zu speichern ausreicht, um zirkulierendes Kaltwasser zu kühlen.

Der bevorzugt zum Einsatz kommende Wärmetauscher hat lediglich Ein- und Ausgänge für das zu kühlende Wasser. In dem Wärmespeicher ist bevorzugt das die Wärme aufnehmende Medium eingeschlossen, d. h. dieses Medium zirkuliert nicht in einem Sekundärkreislauf. Die Regeneration erfolgt allein durch den Primärkreislauf, bevorzugt im Rahmen eines Abzugs von Kaltwasser an einem der Verbraucher. Aus diesem Grund ist das in Fig. 2 gezeigte Ausführungsbeispiel gegenüber dem Ausführungsbeispiel nach Fig. 1 zu bevorzugen.

### Bezugszeichenliste

- 2: Trink- und Brauchwasserversorgungseinrichtung
- 4: Verbraucher
- 6: Warmwasserzirkulation
- 8: Hausanschlussleitung
- 10: Hausanschluss
- 12: Wasserzähler
- 14: Filter
- 16: Volumenstromsensor
- 18: Mündung
- 20: Zirkulationsleitung
- 22: Temperatursensor der Zirkulationsleitung
- 24: Zirkulationspumpe
- 26: Latentwärmespeicher
- 28: Spülventil
- 30: Freier Auslauf
- 32: Motor des Spülventils 28
- 34: Steuervorrichtung
- 36: Temperatursensor des Latentwärmespeichers
- 38: Rückflussverhinderer
- 40: Stockwerkstrennung
- 42: Keller
- 44: Stockwerk
- TWW: Trinkwasserwarm-Zirkulationszuleitung
- TWWZ: Trinkwasserwarm-Zirkulationsableitung
- TWK: Trinkwasser, kalt
- TWKZ: Trinkwasser, kalt, Zirkulationsleitung

## Patentansprüche

1. Trink- und Brauchwasserversorgungseinrichtung (2) eines Gebäudes mit einem Hausanschluss (10) für Trinkwasser, kalt (TWK), der an das öffentliche Versorgungsnetz angeschlossen ist, sowie mit zumindest einer zu zumindest einem Verbraucher (4) führenden Zirkulationsleitung (20), die mit einer Pumpe (24) versehen ist, und mit einem in der Zirkulationsleitung (20) vorgesehenen Wärmetauscher (26), der dem Trinkwasser (TWK) Wärme entzieht,
**dadurch gekennzeichnet,**
**dass** der Wärmetauscher durch einen Latentwärmespeicher (26) gebildet ist und
ein in der Zirkulationsleitung (20) vorgesehenes motorbetriebenes Spülventil (28), das steuerungsmäßig mit einer Steuervorrichtung (34) verbunden ist, zwischen dem Latentwärmespeicher (26) und einer Mündung (18) des Hausanschlusses (8, 10) in die Zirkulationsleitung (20) vorgesehen und in Strömungsrichtung dem Latentwärmespeicher (26) nachgeordnet ist.

2. Trink- und Brauchwasserversorgungseinrichtung (2) nach Anspruch 1, **dadurch gekennzeichnet, dass** der Latentwärmespeicher (26) ein Phase-wechselndes-Medium beinhaltet, welches eine Schmelztemperatur oder Kristallisationstemperatur von kleiner 25°C hat.

3. Trink- und Brauchwasserversorgungseinrichtung (2) nach Anspruch 1 oder 2, **dadurch gekennzeichnet, dass** die Steuervorrichtung (34) steuerungsmäßig mit einem dem Wärmetauscher (26) zugeordneten Temperatursensor (36) und einem der Zirkulationsleitung (20) zugeordneten Temperatursensor (22) verbunden ist.

4. Trink- und Brauchwasserversorgungseinrichtung (2) nach einem der vorherigen Ansprüche, **dadurch gekennzeichnet, dass** die Steuervorrichtung (34) einen ersten Spülmodus aufweist, in dem bei übermäßiger Wassererwärmung des Wassers in der Zirkulationsleitung (20) das Spülventil (28) zum Ableiten von Wasser aus der Zirkulationsleitung (20) geöffnet wird.

5. Trink- und Brauchwasserversorgungseinrichtung (2) nach Anspruch 3, **dadurch gekennzeichnet, dass** die Steuervorrichtung (34) einen Kühlmodus aufweist, in dem abhängig von einem Vergleich von den beiden Temperatursensoren (22, 36) gemessenen Temperaturwerten das Spülventil zum Spülen der Zirkulationsleitung und Kühlen des Wärmetauschers (26) betätigt wird.

6. Trink- und Brauchwasserversorgungseinrichtung (2) nach Anspruch 4, **gekennzeichnet durch** einen zwischen dem Hausanschluss (8, 10) und der Zirkulationsleitung (20) vorgesehenen Volumenstromsensor (16), der steuerungsmäßig mit der Steuervorrichtung (34) verbunden ist, wobei die Steuervorrichtung (34) einen zweiten Spülmodus aufweist, in dem bei unzureichender Wasserentnahme das Spülventil (28) zum Ableiten von Wasser aus der Zirkulationsleitung (20) geöffnet wird.

7. Trink- und Brauchwasserversorgungseinrichtung (2) nach einem der vorherigen Ansprüche, **dadurch gekennzeichnet, dass** die Steuervorrichtung (34) einen Regenerationsmodus aufweist, in dem abhängig von einer in dem Wärmetauscher (26) gemessenen Temperatur ein Spülen zur Regeneration eines die Wärme des Trinkwassers im Kühlbetrieb aufnehmenden Mediums vorgegeben wird.

8. Trink- und Brauchwasserversorgungseinrichtung (2) nach den Ansprüchen 5 und 6, **dadurch gekennzeichnet, dass** die Zirkulationspumpe (24) steuerungsmäßig so mit der Steuervorrichtung (34) verbunden ist, dass die Zirkulationspumpe (24) im ersten und/oder zweiten Spülmodus und/oder im Kühlmodus ausgeschaltet wird.

9. Trink- und Brauchwasserversorgungseinrichtung (2) nach Anspruch 7, **dadurch gekennzeichnet, dass** die Steuervorrichtung (34) so ausgebildet ist, dass der Spül- und/oder der Regenerationsmodus abhängig von einer durch den dem Wärmetauscher (26) zugeordneten Temperatursensor (36) gemessenen Temperatur des Mediums gestoppt wird.

## Claims

1. Drinking and service water supply apparatus (2) for a building having a domestic connection (10) for drinking water, cold (TWK), which connection is connected to the public supply network, and having at least one circulation line (20) which leads to at least one consumer (4) and is provided with a pump (24), and having a heat exchanger (26) provided in the circulation line (20) which extracts heat from the drinking water (TWK), **characterised in that** the heat exchanger is formed by a latent heat accumulator (26) and a motor-operated flushing valve (28) which is provided in the circulation line (20) and is connected for control to a control device (34) is provided between the latent heat accumulator (26) and an opening (18) of the domestic connection (8, 10) into the circulation line (20) and is arranged downstream of the latent heat accumulator (26) in the flow direction.

2. Drinking and service water supply apparatus (2) according to claim 1, **characterised in that** the latent heat accumulator (26) includes a phase change material having a melting temperature or crystallisation temperature of less than 25°C.

3. Drinking and service water supply apparatus (2) according to either claim 1 or claim 2, **characterised in that** the control device (34) is connected for control to a temperature sensor (36) associated with the heat exchanger (26) and to a temperature sensor (22) associated with the circulation line (20).

4. Drinking and service water supply apparatus (2) according to any of the preceding claims, **characterised in that** the control device (34) has a first flushing mode in which, in the event of excessive water heating of the water in the circulation line (20), the flushing valve (28) is opened in order to drain water from the circulation line (20).

5. Drinking and service water supply apparatus (2) according to claim 3, **characterised in that** the control device (34) has a cooling mode in which, depending on a comparison of the temperature values measured by the two temperature sensors (22, 36), the flushing valve is actuated in order to flush the circulation line and cool the heat exchanger (26).

6. Drinking and service water supply apparatus (2) according to claim 4, **characterised by** a volumetric flow rate sensor (16) provided between the domestic connection (8, 10) and the circulation line (20), which sensor is connected for control to the control device (34), the control device (34) having a second flushing mode in which, in the case of insufficient removal of water, the flushing valve (28) is opened in order to drain water from the circulation line (20).

7. Drinking and service water supply apparatus (2) according to any of the preceding claims, **characterised in that** the control device (34) has a regeneration mode in which, depending on a temperature measured in the heat exchanger (26), flushing is specified for the regeneration of a medium absorbing the heat of the drinking water in cooling operation.

8. Drinking and service water supply apparatus (2) according to claims 5 and 6, **characterised in that** the circulation pump (24) is connected for control to the control device (34) in such a way that the circulation pump (24) is switched off in the first and/or second flushing mode and/or in the cooling mode.

9. Drinking and service water supply apparatus (2) according to claim 7, **characterised in that** the control device (34) is designed so that the flushing mode and/or the regeneration mode is stopped depending on a temperature of the medium measured by the temperature sensor (36) associated with the heat exchanger (26).

## Revendications

1. Système d'alimentation en eau potable et eau sanitaire (2) d'un bâtiment, comprenant un branchement domestique (10) pour eau potable, froide (TWK), qui est raccordé au réseau public d'alimentation, ainsi qu'au moins une conduite de circulation (20) menant à au moins un récepteur-consommateur (4) et munie d'une pompe (24), et comprenant également un échangeur de chaleur (26), qui est prévu dans la conduite de circulation (20), et qui prélève de la chaleur à l'eau potable (TWK), **caractérisé en ce que** l'échangeur de chaleur est formé par un accumulateur de chaleur latente (26), et une vanne de rinçage (28) entrainée par moteur, prévue dans la conduite de circulation (20) et reliée sur le plan de la commande à un dispositif de commande (34), est prévue entre l'accumulateur de chaleur latente (26) et une embouchure (18) du branchement domestique (8, 10) dans la conduite de circulation (20), et est agencée en aval de l'accumulateur de chaleur latente (26) en se référant à la direction d'écoulement.

2. Système d'alimentation en eau potable et eau sanitaire (2) selon la revendication 1, **caractérisé en ce que** l'accumulateur de chaleur latente (26) renferme un milieu à changement de phase, qui possède une température de fusion ou une température de cristallisation de moins de 25°C.

3. Système d'alimentation en eau potable et eau sanitaire (2) selon la revendication 1 ou la revendication 2, **caractérisé en ce que** le dispositif de commande (34) est relié sur le plan de la commande, à un capteur de température (36) associé à l'échangeur de chaleur (26), et à un capteur de température (22) associé à la conduite de circulation (20).

4. Système d'alimentation en eau potable et eau sanitaire (2) selon l'une des revendications précédentes, **caractérisé en ce que** le dispositif de commande (34) présente un premier mode de rinçage d'après lequel, dans le cas d'un échauffement d'eau excessif de l'eau dans la conduite de circulation (20), on procède à l'ouverture de la vanne de rinçage (28) pour évacuer de l'eau de la conduite de circulation (20) .

5. Système d'alimentation en eau potable et eau sanitaire (2) selon la revendication 3, **caractérisé en ce que** le dispositif de commande (34) présente un mode de refroidissement d'après lequel, en fonction d'une comparaison de valeurs de température mesurées par les deux capteurs de température (22, 36), on actionne la vanne de rinçage pour rincer la conduite de circulation et refroidir l'échangeur de chaleur (26).

6. Système d'alimentation en eau potable et eau sanitaire (2) selon la revendication 4, **caractérisé par** un capteur de débit volumique (16), qui est prévu entre le branchement domestique (8, 10) et la conduite de circulation (20), et qui est relié sur le plan de la commande, au dispositif de commande (34), le dispositif de commande (34) présentant un deuxième mode de rinçage d'après lequel, dans le cas d'un prélèvement d'eau insuffisant, on ouvre la vanne de rinçage (28) pour évacuer de l'eau de la conduite de circulation (20).

7. Système d'alimentation en eau potable et eau sanitaire (2) selon l'une des revendications précédentes, **caractérisé en ce que** le dispositif de commande (34) présente un mode de régénération, d'après lequel, en fonction d'une température mesurée dans l'échangeur de chaleur (26), on prescrit un rinçage pour la régénération d'un milieu absorbant la chaleur de l'eau potable en mode de fonctionnement de refroidissement.

8. Système d'alimentation en eau potable et eau sanitaire (2) selon les revendications 5 et 6, **caractérisé en ce que** la pompe de circulation (24) est reliée, sur le plan de la commande, au dispositif de commande (34), de manière telle, que la pompe de circulation (24) soit mise à l'arrêt dans le premier et/ou le deuxième mode de rinçage et/ou dans le mode de refroidissement.

9. Système d'alimentation en eau potable et eau sanitaire (2) selon la revendication 7, **caractérisé en ce que** le dispositif de commande (34) est conçu de manière telle, que le mode de rinçage et/ou de régénération soit stoppé en fonction d'une température dudit milieu, mesurée par le capteur de température (36) associé à l'échangeur de chaleur (26).
